# FASCICULE DE BREVET EUROPEEN

(11) **EP 2 956 349 B1**
(45) Date de publication et mention de la délivrance du brevet: **12.12.2018**
(21) Numéro de dépôt: 13820836.8
(22) Date de dépôt: 19.12.2013
(51) Int. Cl.: B62D 1/181

(54) **DISPOSITIF D'ESCAMOTAGE D'UNE COLONNE DE DIRECTION**
VORRICHTUNG ZUM VERSTAUEN EINER LENKSÄULE
DEVICE FOR STOWING A STEERING COLUMN

(30) Priorité: 12.02.2013 FR 1351197; 15.02.2013 FR 1351340
(43) Date de publication de la demande: 23.12.2015
(73) Titulaire: Robert Bosch Automotive Steering Vendôme, 41100 Vendome (FR)
(72) Inventeur: FEVRE, Laurent, F-41000 Saint Sulpice (FR); SAUQUET, Mickael, F-41100 Villerable (FR)
(74) Mandataire: Novagraaf Technologies
(86) Numéro de dépôt international: PCT/FR2013/053205
(87) Numéro de publication internationale: WO 2014/125174

(56) Documents cités:
- EP-A1- 1 733 950
- DE-A1-102008 054 310
- US-B1- 6 390 505

## Description

La présente invention se rapporte à une colonne de direction d'un véhicule automobile. En particulier, lorsqu'un conducteur monte dans une voiture il peut être gêné pour s'assoir à cause du volant qui est placé devant le siège. Il est possible d'escamoter le volant et de laisser de la place au conducteur pour s'assoir.

La colonne de direction qui permet d'ajuster la position du volant afin d'améliorer l'ergonomie du poste de conduite, permet également dans certain cas de mettre le volant dans une position spécifique qui facilite la sortie ou l'installation du conducteur dans le véhicule : c'est la fonction d'escamotage. Plus la course d'escamotage est importante et plus elle sera intéressante pour l'utilisateur, et faciliter son installation dans son siège.

Pour effectuer cette fonction d'escamotage, les dispositifs existant utilisent une fonction d'ajustement axial du volant, qui peut parfois être combinée avec une fonction d'ajustement vertical du volant. Chaque fonction utilise un moteur spécifique.

Cependant, l'ajustement axial du volant est effectué à une vitesse relativement lente pour permettre un positionnement précis du volant lorsque le conducteur règle la profondeur du volant. La vitesse d'escamotage est identique à celle de l'ajustement du volant ce qui engendre un temps d'exécution important de la fonction escamotage, surtout si la course de celle-ci est plus importante que celle concernant l'ajustement de la position du volant. Le document EP1733950 A1 décrit le préambule de la revendication 1.

L'objet de la présente invention est de proposer une colonne de direction qui permette un escamotage plus important et plus rapide du volant.

La colonne de direction selon l'invention comprend une patte, une casquette, un tube intérieur, un tube extérieur, un embout de volant et au moins un motoréducteur d'ajustement, elle est caractérisée en ce que la patte est mobile axialement et que la colonne comprend un motoréducteur commandant la patte. Le fait d'avoir une patte mobile permet d'augmenter la longueur d'escamotage du volant, en effet, le débattement est la somme des mouvements de la patte et du motoréducteur d'ajustement alors que dans l'état de la technique seul le tube extérieur est mobile en translation ou verticalement. Les motoréducteurs pourront être électriques.

Selon l'invention le tube extérieur est mobile axialement et un motoréducteur d'ajustement axial commande ledit tube extérieur. Le débattement du volant est alors la somme de la translation de la patte et du tube extérieur.

Selon une autre caractéristique, la colonne est inclinable et qu'un motoréducteur d'ajustement vertical commande l'inclinaison de ladite colonne. Le débattement du volant est alors la somme de la translation de la patte et du tube extérieur et l'inclinaison de la colonne de direction.

Selon une disposition particulière, un dispositif de commande actionne les motoréducteurs. Les motoréducteurs sont actionnés par un même dispositif de commande. Le dispositif de commande peut être réglé afin de mettre en marche la fonction d'escamotage lorsque le conducteur coupe le contact du véhicule et de repositionner le volant quand il remet le contact.

Selon une autre disposition, le dispositif de commande actionne tous les motoréducteurs en même temps. En actionnant simultanément le moteur d'ajustement axial du volant, le moteur d'ajustement vertical de la colonne et le moteur d'escamotage, on augmente la vitesse résultante pour l'exécution de la fonction escamotage du volant.

Selon une caractéristique particulière, le tube extérieur coulisse sur le tube intérieur. Les deux tubes extérieur et intérieur sont coaxiaux et permettent de régler la profondeur du volant.

Selon une autre caractéristique particulière, le coulissement du tube extérieur sur le tube intérieur s'effectue avec un fourreau. Cela permet de limiter les efforts de friction et le bruit lors de l'ajustement axial du volant. Cela permet également une connexion sans jeu entre les tubes pour avoir une bonne raideur.

Selon une mode de réalisation particulier, la patte coulisse à l'intérieur de la casquette par l'intermédiaire d'un système de guidage composé de rails et de billes. On a ainsi les mêmes avantages qu'avec le foureau pour l'escamotage du volant et cela évite aussi le jeu entre les pièces pour avoir une raideur élevée. Il n'y a pas d'influence par rapport aux efforts latéraux.

Selon une autre mode de réalisation, la patte coulisse à l'intérieur de la casquette par friction. Cette solution est moins chère.

Selon une disposition particulière, le motoréducteur d'ajustement axial est relié au tube extérieur par un axe fileté. L'axe fileté permet un réglage fin du volant par le conducteur.

Selon une première disposition, le motoréducteur d'ajustement axial est fixé sur la patte.

Selon une deuxième disposition, le motoréducteur d'ajustement axial est fixé sur le tube extérieur.

Selon un deuxième mode de réalisation, le motoréducteur d'escamotage est fixé sur la casquette.

Selon un premier mode de réalisation, le motoréducteur d'escamotage est fixé sur la patte.

Selon un premier dispositif, la patte coulisse dans la casquette avec un angle vertical par rapport au déplacement du tube extérieur. Ceci permet d'avoir la remontée verticale du volant en même temps que le déplacement axial et permet de dégager plus de place pour accède rua véhicule.

Selon un deuxième dispositif, la patte coulisse dans la casquette parallèlement au déplacement du tube extérieur. Le système est plus compact.

D'autres avantages pourront encore apparaître à l'homme du métier à la lecture des exemples ci-dessous, illustrés par les figures annexées, donnés à titre d'exemple.
- La figure 1 est une vue en perspective d'une colonne de direction selon l'invention,
- La figure 2 représente une vue en perspective de l'autre coté par rapport à la figure 1,
- La figure 3 est une vue en perspective d'une colonne de direction vue de l'arrière,
- La figure 4 est une vue en perspective d'une colonne de direction selon l'invention en position escamotée,
- Les figures 5, 6 et 7 sont des vues de coté d'une colonne de direction en position déployée, en position reculée et en position escamotée,
- La figure 8 est une vue en coupe en bout de casquette,
- La figure 9 est une vue en coupe à la hauteur d'un motoréducteur d'escamotage vertical,

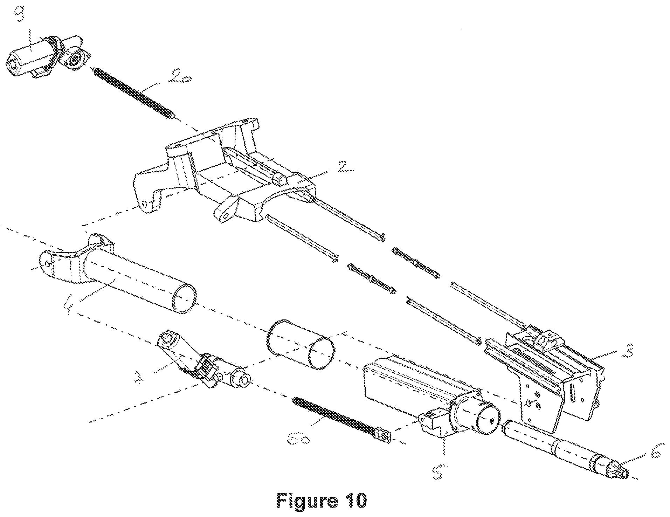

- La figure 10 est une vue éclatée de la colonne de direction.

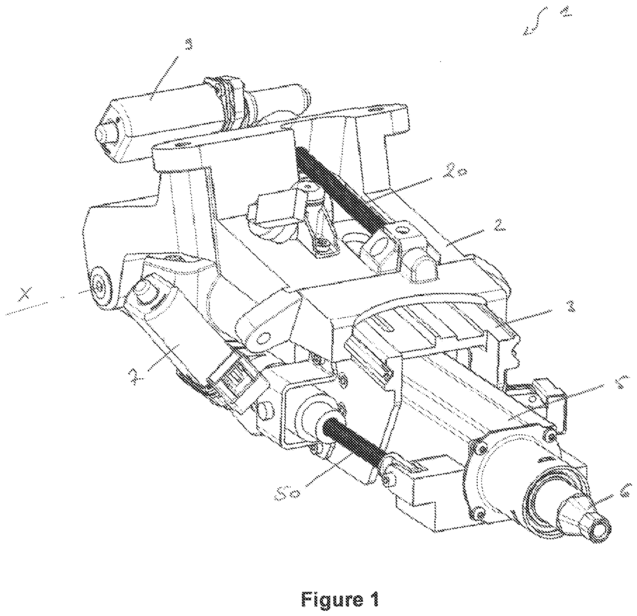

La colonne de direction 1 illustrée aux figures 1, 2 et 3 comprend une casquette 2, une patte 3, un tube intérieur 4, un tube extérieur 5, un embout volant 6, un motoréducteur d'ajustement axial 7, un motoréducteur d'ajustement vertical 8 et un motoréducteur 9. L'embout volant 6 est lié au tube extérieur 5.

Sur la figure 1, le motoréducteur d'ajustement axial 7 est fixé sur la patte 3. Une vis 50 est connectée au motoréducteur 7 et fixée sur le tube extérieur 5. L'action du motoréducteur 7 fait coulisser le tube externe 5 d'avant en arrière.

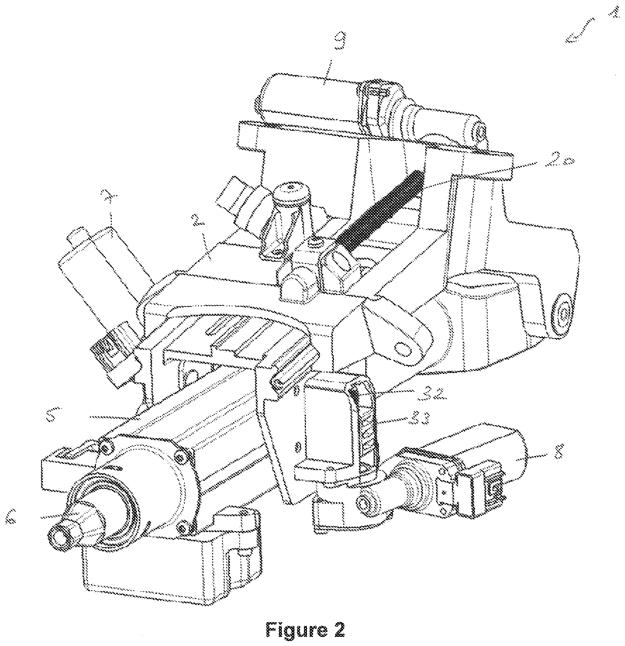

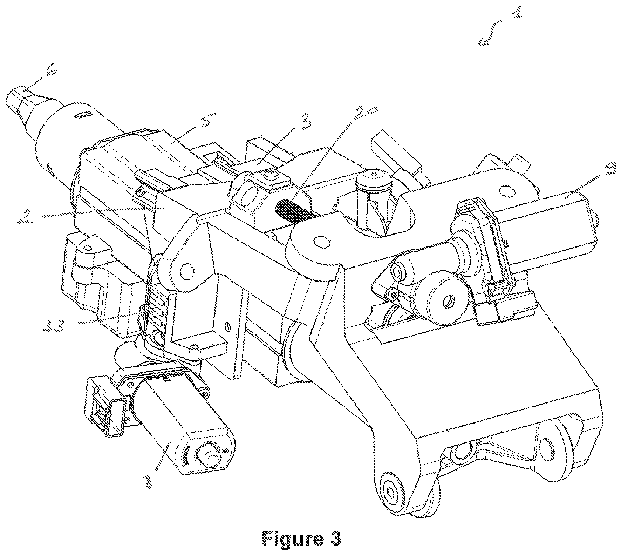

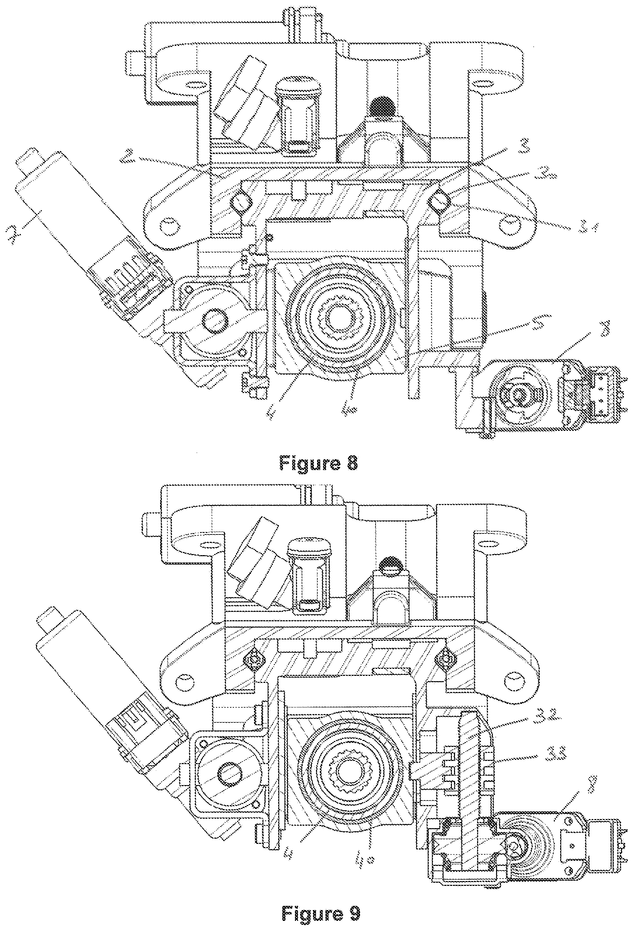

Le motoréducteur d'ajustement vertical 8, illustré figures 2 et 3, est fixé sur la patte 3 et actionne une vis 32 qui coopère avec un écrou carré 33 et permet d'orienter verticalement le tube extérieur 5 (cf figure 9).

Sur la figure 1, le motoréducteur 9 est fixé sur la casquette 2. Une vis 20 est connectée au moteur 9, fixée sur la patte 3 et permet l'escamotage du volant.

La position du volant (non représenté), fixé sur l'embout volant 6, est ajustable par l'intermédiaire des motoréducteurs 7 et 9. Lors de l'ajustement ergonomique du volant, le tube supérieur 5 coulisse sur le tube intérieur 4 avec un fourreau intermédiaire 40 et la colonne est orientée verticalement par un mouvement de rotation autour d'un axe X sensiblement horizontal par rapport au véhicule et perpendiculaire à l'axe principal de la colonne 1. Le coulissement entre tube 4 et tube 5 peut aussi s'effectuer sans fourreau, avec ou sans revêtement de surface.

La mise en fonction du motoréducteur 7 permet d'ajuster la position du volant dans l'axe des tubes 4 et 5. La tension d'alimentation du motoréducteur 7 permet de maitriser la vitesse de cet ajustement du tube extérieur 5 sur le tube intérieur 4: soit V1, de direction axiale ou sensiblement horizontale.

La mise en fonction du motoréducteur 8 permet d'orienter la position du volant en haut ou en bas. La tension d'alimentation du motoréducteur 8 permet de régler la vitesse de l'inclinaison du volant : soit V2, de direction verticale.

La mise en fonction du motoréducteur 9 permet de faire coulisser la patte 3 dans la casquette 2 qui entraine en même temps le moteur 7, la vis 50, le tube extérieur 5 et l'embout volant 6 afin d'ajuster la position du volant. La tension d'alimentation du motoréducteur 9 permet de maitriser la vitesse de cet ajustement : V3. Cette vitesse a une composante verticale V3v et une composante horizontale ou axiale V3h.

La mise en fonction simultanée des motoréducteurs 7, 8 et 9 permet d'ajuster la position du volant. La vitesse de ce mouvement est alors une combinaison des 3 vitesses individuelles, soit V4 avec une composante horizontale V4h= V1 + V3h et une composante verticale V4v = V2 + V3v.

Il est possible de prévoir que seulement un motoréducteur d'ajustement soit actionné 7 ou 8 (et non les deux 7 et 8) avec le motoréducteur 9, on aura alors V'4 avec deux composantes :
V'4h= V3h et V'4v= V2 + V3v
ou V"4 avec deux composantes :
V"4h= V1 + V3h et V"4v= V3v.

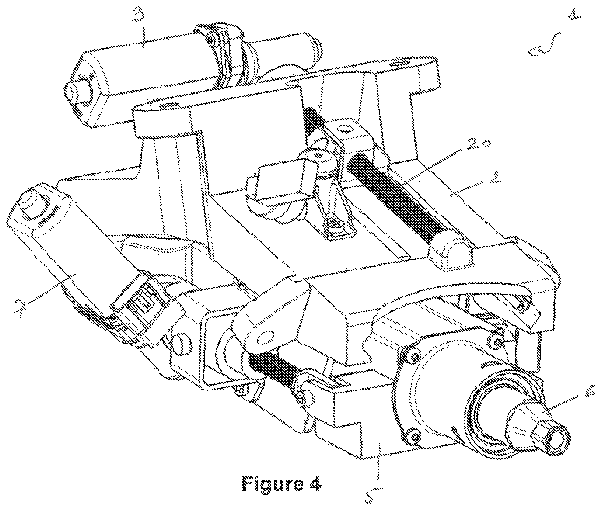

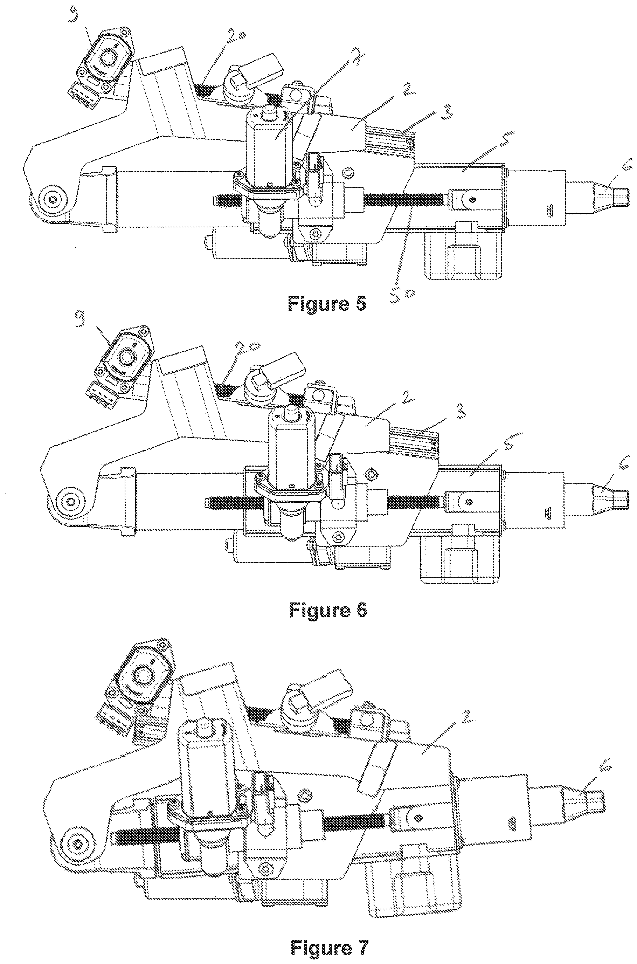

Nous allons maintenant décrire l'escamotage du volant. Le tube extérieur 5 coulisse sur le tube intérieur 4 et la patte 3 coulisse à l'intérieur de la casquette 2 par l'intermédiaire d'un système de guidage composé de rails 30 et de billes 31 (figure 8). On pourra par exemple avoir deux rangées de 3 billes 31 et quatre rails 30. Le système à bille peut être remplacé par un système à friction avec ou sans revêtement de surface sans sortir du cadre de la présente invention. La colonne 1 est alors en position escamotée comme illustré aux figures 4 et 7.

Le motoréducteur d'ajustement d'inclinaison 8 peut être combiné avec les autres pour relever le volant et ainsi mieux dégager encore l'accès au siège conducteur.

Sans sortir du cadre de la présente invention, il est possible de modifier certaines caractéristiques comme par exemple :
- intégrer un système d'absorption d'énergie entre la casquette 2 et la patte 3,
- avoir une direction de déplacement de la patte 3 dans la casquette 2 parallèle aux axes des tubes 4 et 5 ou bien suivant une direction spécifique
- prévoir que le motoréducteur d'ajustement vertical 8 pour le réglage vertical est fixé sur la casquette 2 au lieu de la patte 3,
- fixer le motoréducteur 9 sur la patte 3 au lieu de la casquette 2,
- fixer le motoréducteur d'ajustement axial 7 sur le sur tube extérieur 5 au lieu de la patte 3,
- avoir un guidage entre la patte 3 et la caquette 2 qui peut être rectiligne, curviligne ou autre profil spécifique

## Revendications

1. Colonne de direction (1) comprenant une patte (3), une casquette (2), un tube intérieur (4), un tube extérieur (5), un embout de volant (6) et au moins un motoréducteur d'ajustement (7, 8), la patte (3) étant mobile axialement et la colonne (1) comprenant un motoréducteur (9) commandant la patte (3) **caractérisée en ce que** le tube extérieur (5) est mobile axialement et qu'un motoréducteur d'ajustement axial (7) commande ledit tube extérieur (5).

2. Colonne de direction (1) selon une des revendications précédentes, **caractérisé en ce que** la colonne (1) est inclinable et qu'un motoréducteur d'ajustement vertical (8) commande l'inclinaison de ladite colonne (1).

3. Colonne de direction (1) selon une des revendications précédentes, **caractérisé en ce qu'**un dispositif de commande actionne les motoréducteurs (7, 8, 9).

4. Colonne de direction (1) selon la revendication précédente, **caractérisé en ce que** le dispositif de commande actionne tous les motoréducteurs (7, 8, 9) en même temps.

5. Colonne de direction (1) selon une des revendications précédentes, **caractérisé en ce que** le tube extérieur (5) coulisse sur le tube intérieur (4).

6. Colonne de direction (1) selon la revendication précédente, **caractérisé en ce que** le coulissement du tube extérieur (5) sur le tube intérieur (4) s'effectue avec un fourreau (40).

7. Colonne de direction (1) selon une des revendications précédentes, **caractérisé en ce que** la patte (3) coulisse à l'intérieur de la casquette (2) par l'intermédiaire d'un système de guidage composé de rails (30) et de billes (31).

8. Colonne de direction (1) selon la revendication précédente, **caractérisé en ce que** la patte (3) coulisse à l'intérieur de la casquette (2) par friction.

9. Colonne de direction (1) selon une des revendications précédentes, **caractérisé en ce que** le motoréducteur d'ajustement axial (7) est relié au tube extérieur (5) par une vis filetée (50).

10. Colonne de direction (1) selon une des revendications précédentes, **caractérisé en ce que** le motoréducteur d'ajustement axial (7) est fixé sur la patte (3).

11. Colonne de direction (1) selon une des revendications 1 à 10, **caractérisé en ce que** le motoréducteur d'ajustement axial est fixé sur le tube extérieur.

12. Colonne de direction (1) selon une des revendications précédentes, **caractérisé en ce que** le motoréducteur (9) est fixé sur la casquette (2).

13. Colonne de direction (1) selon une des revendications 1 à 11, **caractérisé en ce que** le motoréducteur (9) est fixé sur la patte (3).

14. Colonne de direction (1) selon une des revendications précédentes, **caractérisé en ce que** la patte coulisse dans la casquette avec un angle vertical par rapport au déplacement du tube extérieur.

15. Colonne de direction (1) selon une des revendications précédentes, **caractérisé en ce que** la patte coulisse dans la casquette parallèlement au déplacement du tube extérieur.

## Patentansprüche

1. Lenksäule (1), die eine Klammer (3), eine Verschalung (2), ein Innenrohr (4), ein Außenrohr (5), einen Lenkradansatz (6) und mindestens einen Getriebemotor (7, 8) zur Einstellung umfasst, wobei die Klammer (3) axial beweglich ist und die Säule (1) einen Getriebemotor (9) umfasst, der die Klammer (3) ansteuert,
**dadurch gekennzeichnet, dass** das Außenrohr (5) axial beweglich ist und dass ein Getriebemotor (7) zur axialen Einstellung (7) das Außenrohr (5) ansteuert.

2. Lenksäule (1) nach einem der vorhergehenden Ansprüche, **dadurch gekennzeichnet, dass** die Säule (1) geneigt werden kann und dass ein Getriebemotor (8) zur vertikalen Einstellung die Neigung der Säule (1) bewirkt.

3. Lenksäule (1) nach einem der vorhergehenden Ansprüche, **dadurch gekennzeichnet, dass** eine Steuervorrichtung die Getriebemotoren (7, 8, 9) betätigt.

4. Lenksäule (1) nach dem vorhergehenden Anspruch, **dadurch gekennzeichnet, dass** die Steuervorrichtung alle Getriebemotoren (7, 8, 9) zur selben Zeit betätigt.

5. Lenksäule (1) nach einem der vorhergehenden Ansprüche, **dadurch gekennzeichnet, dass** das Außenrohr (5) auf dem Innenrohr (4) gleitet.

6. Lenksäule (1) nach dem vorhergehenden Anspruch, **dadurch gekennzeichnet, dass** das Gleiten des Außenrohrs (5) auf dem Innenrohr (4) mit einer Buchse (40) erfolgt.

7. Lenksäule (1) nach einem der vorhergehenden Ansprüche, **dadurch gekennzeichnet, dass** die Klammer (3) mittels eines Führungssystems, das sich aus Schienen (30) und Kugeln (31) zusammensetzt, im Inneren der Verschalung (2) gleitet.

8. Lenksäule (1) nach dem vorhergehenden Anspruch, **dadurch gekennzeichnet, dass** die Klammer (3) durch Reibung im Inneren der Verschalung (2) gleitet.

9. Lenksäule (1) nach einem der vorhergehenden Ansprüche, **dadurch gekennzeichnet, dass** der Getriebemotor (7) zur axialen Einstellung mit einer Gewindeschraube (50) mit dem Außenrohr (5) verbunden ist.

10. Lenksäule (1) nach einem der vorhergehenden Ansprüche, **dadurch gekennzeichnet, dass** der Getriebemotor (7) zur axialen Einstellung an der Klammer (3) befestigt ist.

11. Lenksäule (1) nach einem der Ansprüche 1 bis 10, **dadurch gekennzeichnet, dass** der Getriebemotor zur axialen Einstellung an dem Außenrohr befestigt ist.

12. Lenksäule (1) nach einem der vorhergehenden Ansprüche, **dadurch gekennzeichnet, dass** der Getriebemotor (9) an der Verschalung (2) befestigt ist.

13. Lenksäule (1) nach einem der Ansprüche 1-11, **dadurch gekennzeichnet, dass** der Getriebemotor (9) an der Klammer (3) befestigt ist.

14. Lenksäule (1) nach einem der vorhergehenden Ansprüche, **dadurch gekennzeichnet, dass** die Klammer bezüglich der Verschiebung des Außenrohrs in einem vertikalen Winkel in der Verschalung gleitet.

15. Lenksäule (1) nach einem der vorhergehenden Ansprüche, **dadurch gekennzeichnet, dass** die Klammer parallel zur Verschiebung des Außenrohrs in der Verschalung gleitet.

## Claims

1. A steering column (1) comprising a leg (3), a fairing (2), an inner tube (4), an outer tube (5), a steering wheel stub (6) and at least one adjustment geared motor unit (7, 8), the leg (3) being axially mobile and the column (1) comprising a geared motor unit (9) operating the leg (3) **characterized in that** the outer tube (5) is axially mobile and **in that** an axial adjustment geared motor unit (7) operates said outer tube (5).

2. The steering column (1) as claimed in one of the preceding claims, **characterized in that** the column (1) can be inclined and **in that** a vertical adjustment geared motor unit (8) controls the rake of said column (1) .

3. The steering column (1) as claimed in one of the preceding claims, **characterized in that** a control device actuates the geared motor units (7, 8, 9).

4. The steering column (1) as claimed in the preceding claim, **characterized in that** the control device actuates all the geared motor units (7, 8, 9) at the same time.

5. The steering column (1) as claimed in one of the preceding claims, **characterized in that** the outer tube (5) slides on the inner tube (4).

6. The steering column (1) as claimed in the preceding claim, **characterized in that** the sliding of the outer tube (5) on the inner tube (4) takes place using a bushing (40).

7. The steering column (1) as claimed in one of the preceding claims, **characterized in that** the leg (3) slides inside the fairing (2) by means of a guide system made up of rails (30) and of balls (31).

8. The steering column (1) as claimed in the preceding claim, **characterized in that** the leg (3) slides inside the fairing (2) by friction.

9. The steering column (1) as claimed in one of the preceding claims, **characterized in that** the axial adjustment geared motor unit (7) is connected to the outer tube (5) by a threaded screw (50).

10. The steering column (1) as claimed in one of the preceding claims, **characterized in that** the axial adjustment geared motor unit (7) is fixed to the leg (3) .

11. The steering column (1) as claimed in one of claims 1 to 10, **characterized in that** the axial adjustment geared motor unit is fixed to the outer tube.

12. The steering column (1) as claimed in one of the preceding claims, **characterized in that** the geared motor unit (9) is fixed to the fairing (2).

13. The steering column (1) as claimed in one of claims 1 to 11, **characterized in that** the geared motor unit (9) is fixed to the leg (3).

14. The steering column (1) as claimed in one of the preceding claims, **characterized in that** the leg slides in the fairing with a vertical angle with respect to the movement of the outer tube.

15. The steering column (1) as claimed in one of the preceding claims, **characterized in that** the leg slides in the fairing parallel to the movement of the outer tube.
